# DEMANDE DE BREVET EUROPEEN

(11) **EP 1 787 545 A2**
(43) Date de publication de la demande: **23.05.2007**
(21) Numéro de dépôt: 06123032.2
(22) Date de dépôt: 26.10.2006
(51) Int. Cl.: A46B 3/16, A45D 34/04

(54) **Applicateur pinceau**

(30) Priorité: 17.11.2005 FR 0553490
(71) Demandeur: L'Oreal, 75008 Paris (FR)
(72) Inventeur: Gueret, Jean-Louis H., 75016 Paris (FR)
(74) Mandataire: Julio, Charlotte

(57) **Abrégé**

La présente invention concerne un applicateur pinceau comportant :
- au moins une touffe de poils (8),
- une tige (5) comportant un logement débouchant à une extrémité de la tige, dans lequel est fixée la touffe de poils au moyen d'une agrafe au moins, ce logement étant défini par une paroi tubulaire présentant au moins une portion matricée (20) de façon à accroître la tenue de l'agrafe et/ou modifier la configuration des poils.

## Description

La présente invention concerne les applicateurs pinceaux et plus particulièrement mais non exclusivement ceux destinés à l'application d'un produit cosmétique, notamment sur les ongles, paupières, lèvres ou cheveux, par exemple un vernis à ongles, un rouge à lèvres ou un brillant à lèvres.

Les demandes de brevet européen 1 462 023, 1 477 083, 1 504 691, 1 563 759, les brevets US 2 122 980, 4 253 213, 5 588 447 et 6 033 143 et 6 070 595 et la demande de brevet japonais 11-244040 divulguent des exemples d'applicateurs pinceaux.

Un applicateur pinceau connu comporte typiquement une tige moulée comportant inférieurement une paroi tubulaire définissant un logement et au moins une touffe de poils disposée dans ce logement.

La touffe de poils peut être repliée en deux dans le logement et fixée au moyen d'une agrafe.

La forme du logement conditionne la manière dont les poils de la touffe quittent la tige et donc a une incidence sur les caractéristiques d'application.

La tige étant réalisée par moulage, un nouveau moule est nécessaire à chaque fois que l'on souhaite modifier la forme du logement, ce qui implique un investissement relativement important.

Par ailleurs, les applicateurs pinceaux peuvent être réalisés avec des poils de natures différentes ou en quantité variable, selon les caractéristiques d'application recherchées.

L'implantation de touffes de poils différentes dans des logements de forme identique peut poser des problèmes de tenue des poils.

Dans le cas par exemple de poils glissants, ces derniers participent à un degré moindre à la retenue de l'agrafe dans la tige que des poils non glissants.

La tenue de l'agrafe dans la tige est susceptible de diminuer lorsque le nombre de poils de la touffe diminue. Or, il peut s'avérer souhaitable lorsque l'on recherche de la souplesse de réduire le nombre de poils de la touffe.

Enfin, il peut s'avérer relativement difficile de réaliser un applicateur ayant un faisceau de poils s'étendant hors de la tige d'une façon suffisamment homogène, lorsque ce faisceau de poils provient d'une touffe repliée en deux et fixée dans le logement de la tige par une agrafe.

Il existe par conséquent un besoin pour bénéficier d'un applicateur pinceau remédiant à tout ou partie des inconvénients précités, notamment dans lequel la touffe de poils puisse être fixée de manière satisfaisante sur la tige.

Il existe également un besoin pour pouvoir bénéficier, si cela est recherché, d'un applicateur pinceau comportant un faisceau de poils présentant une épaisseur relativement faible et sensiblement constante.

Il existe encore un besoin pour bénéficier, le cas échéant, d'un pinceau applicateur comportant un faisceau de poils relativement large, par exemple pour couvrir la surface d'un ongle, et/ou relativement homogène ou présentant une forme difficile voire impossible à obtenir avec les applicateurs conventionnels.

L'invention permet de répondre à tout ou partie de ces besoins.

Selon l'un de ses aspects, l'invention a pour objet un applicateur pinceau comportant :
- au moins une touffe de poils,
- une tige comportant un logement débouchant à une extrémité de la tige, dans lequel est fixée la touffe de poils au moyen d'une agrafe au moins, ce logement étant défini par une paroi tubulaire présentant au moins une portion qui est matricée.

La portion matricée peut par exemple accroître la tenue de l'agrafe et/ou modifier la configuration des poils dans et/ou hors du logement.

Ainsi, la portion matricée peut être utile pour modifier la forme du logement recevant les poils sans avoir à réaliser un nouveau moule. Un même moule peut être utilisé pour réaliser des applicateurs ayant, après matriçage, des logements de formes différentes recevant les touffes de poils, ce qui permet de réaliser une économie d'échelle.

En outre, la portion matricée peut permettre de créer des logements de formes différentes de celles pouvant être obtenues par moulage, voire impossibles à obtenir par moulage, ce qui permet de réaliser des applicateurs ayant d'autres caractéristiques d'application.

La portion matricée peut définir un rétreint dans le logement.

La portion matricée peut permettre de créer un logement ayant une ouverture dont la forme ne conviendrait pas à l'insertion à travers elle d'une agrafe.

La tige de l'applicateur peut présenter au moins une portion ayant en section transversale une forme généralement aplatie. Cela peut faciliter l'insertion dans la tige d'une touffe de poils et d'une agrafe avec une orientation prédéfinie relativement à la tige.

Cela peut également faciliter le matriçage de la tige avec une orientation prédéfinie relativement à la tige.

La tige de l'applicateur peut encore présenter un détrompeur permettant de la positionner avec une orientation prédéfinie lors de la mise en place de la touffe et de l'agrafe et/ou lors du matriçage.

L'agrafe peut être orientée par exemple sensiblement parallèlement à un grand axe de la section transversale de la tige ou être orientée sensiblement perpendiculairement à un grand axe de la section transversale de la tige ou être orientée autrement encore.

La portion matricée peut s'étendre d'un côté seulement du logement, ou sur au moins deux côtés opposés de la tige.

Le logement peut déboucher par une ouverture de section transversale circulaire ou non circulaire, après matriçage. La tige peut comprendre deux renflements externes, de préférence latéralement opposés, au niveau de la portion matricée. Ces renflements peuvent se projeter vers l'extérieur relativement à la paroi tubulaire de la tige.

La portion matricée peut s'étendre jusqu'à l'extrémité de la tige, ou en retrait de celle-ci.

La touffe de poils peut quitter la tige en formant un faisceau de poils ayant un axe longitudinal sensiblement parallèle à un axe longitudinal d'une portion distale de la tige ou en formant un faisceau de poils ayant un axe longitudinal faisant un angle non nul avec un axe longitudinal d'une portion distale de la tige.

La tige peut comporter une portion distale rapportée sur une portion proximale et le logement peut être défini par cette portion distale. La portion distale rapportée peut être fixée par encliquetage ou autrement sur la portion proximale, par exemple collage, soudage ou matriçage.

Le logement peut déboucher extérieurement non seulement par une ouverture située en bout de tige, mais également par au moins une ouverture latérale. Cette ouverture latérale peut être réalisée, le cas échéant, lors du matriçage.

L'ouverture latérale peut permettre de conférer plus de souplesse à l'extrémité de la tige, par exemple.

La touffe de poils peut comporter moins de 110 brins, voire 100 brins ou moins, avant insertion dans le logement de la tige, et l'applicateur peut comporter moins de 220 poils apparents, voire 200 poils ou moins. Le matriçage de la tige peut permettre d'assurer une bonne tenue de la touffe de poils et de l'agrafe même pour un nombre de poils plus faible que celui habituellement rencontré.

L'applicateur peut comporter, dans un exemple de mise en oeuvre de l'invention, une gaine entourant au moins partiellement la tige et permettant de constituer une réserve de produit.

La gaine peut ou non recouvrir au moins partiellement la portion des poils qui s'étend hors du logement.

La tige peut se raccorder à un organe de préhension, lequel peut être configuré pour fermer un récipient contenant la composition à appliquer.

La tige peut encore être solidaire d'un récipient contenant la composition à appliquer. La tige peut comporter au moins un canal permettant d'alimenter la touffe de poils avec la composition provenant du récipient.

L'invention a encore pour objet, selon un autre de ses aspects, un procédé de fabrication d'un applicateur pinceau comportant une tige et au moins une touffe de poils et une agrafe pour fixer la touffe de poils dans un logement de la tige, dans lequel :
- on matrice la tige de façon à modifier la forme du logement et améliorer la fixation de l'agrafe et/ou modifier la configuration des poils.

Le matriçage peut s'effectuer à froid ou à chaud.

La touffe de poils peut être fixée d'une manière repérée par rapport à la tige.

Le matriçage peut s'effectuer avec ou sans enlèvement de matière.

Le matriçage peut s'effectuer à distance de l'extrémité libre de la tige ou en variante à partir de l'extrémité libre de la tige.

Le matriçage peut s'effectuer en au moins deux endroits de la tige espacés dans le sens axial.

Au moins l'un desdits endroits peut être situé au-dessus du logement, de façon à créer une charnière sur la tige.

Le matriçage peut s'effectuer sur une distance plus ou moins longue le long de la tige, par exemple sur une distance comprise entre 0,5 mm et 10 mm.

La tige peut être rabotée, le cas échéant, ce qui peut faciliter l'écoulement de la composition.

L'invention a encore pour objet une machine de fabrication d'applicateurs pinceaux comportant :
- un organe de matriçage disposé de manière à matricer une tige à son extrémité ou à proximité de son extrémité, de façon à améliorer la tenue de l'agrafe et/ou modifier la configuration des poils. Une telle machine peut comporter une base permettant de recevoir la tige et une matrice pouvant s'abaisser sur la base pour matricer la tige.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente de manière schématique, en coupe longitudinale partielle, un dispositif de conditionnement et d'application comportant un applicateur pinceau réalisé conformément à un exemple de mise en oeuvre de l'invention,
- la figure 2 représente isolément et partiellement la tige de l'applicateur de la figure 1,
- la figure 3 est une coupe axiale, partielle et schématique, selon III-III de la figure 2,
- la figure 4 est une vue analogue à la figure 3 d'une variante de réalisation,
- la figure 5 est une vue partielle, en élévation, d'une variante de réalisation de l'applicateur,
- la figure 6 est une coupe longitudinale partielle selon VI de la figure 5,
- la figure 7 est une coupe longitudinale partielle d'une variante de réalisation de l'applicateur,
- la figure 8 représente isolément, en coupe longitudinale, la partie inférieure d'un exemple de tige avant mise en place de la touffe de poils,
- les figures 9 et 10 sont des vues analogues à la figure 8 de variantes de réalisation de la tige,
- la figure 11 représente la tige de la figure 9 après fixation d'une touffe de poils et matriçage,
- la figure 12 est une coupe longitudinale, partielle, d'une variante de réalisation de l'applicateur,
- les figures 13 et 14 représentent partiellement, en élévation, d'autres exemples d'applicateurs,
- la figure 15 est une section transversale selon XV-XV de la figure 8,
- les figures 16 à 19 sont des vues analogues à la figure 15, de variantes de réalisation de la tige,
- les figures 20 à 25 représentent isolément, en section transversale, des exemples de tiges et de touffes de poils après matriçage,
- la figure 26 est une coupe longitudinale, partielle et schématique, d'une variante de réalisation de l'applicateur,
- les figures 27 et 28 représentent de manière schématique, en perspective, d'autres exemples de tiges,
- la figure 29 est une vue analogue à la figure 2, illustrant une variante de réalisation de l'applicateur,
- la figure 30 est une vue analogue à la figure 26 d'une variante de réalisation,
- les figures 31 et 32 représentent en coupe longitudinale et schématique des variantes de réalisation de l'applicateur,
- la figure 33 illustre en coupe longitudinale une variante de réalisation de la tige, et
- la figure 34 représente partiellement, en élévation, une variante de réalisation de l'applicateur.

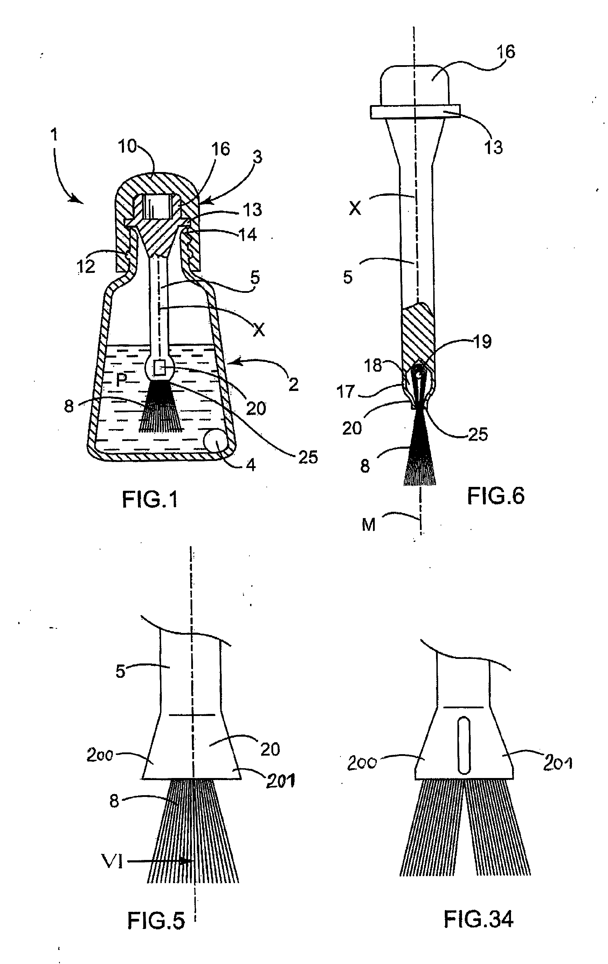

Le dispositif de conditionnement et d'application 1 représenté à la figure 1 comporte un récipient 2 contenant une composition P et un applicateur pinceau 3 pour l'application de la composition P sur des matières kératiniques, par exemple les ongles. La composition P est par exemple un vernis à ongles ou un produit de soin des ongles.

Le dispositif 1 peut contenir, le cas échéant, au moins une bille 4 permettant d'homogénéiser la composition P avant l'application.

Dans l'exemple considéré, l'applicateur 3 comporte une tige 5, par exemple en matière plastique, pourvue à une extrémité d'une touffe de poils 8 et à l'autre extrémité d'un organe de préhension 10 qui constitue également un capuchon de fermeture du récipient 2.

L'organe de préhension 10 est par exemple agencé pour se visser sur un col fileté 12 du récipient 2 mais on ne sort pas du cadre de la présente invention lorsque l'applicateur 3 est fixé différemment sur le récipient, voire n'est pas agencé pour se fixer sur le récipient, ce dernier étant par exemple fermé par un moyen de bouchage indépendant de l'applicateur.

Dans l'exemple illustré, la tige 5 comporte à son extrémité engagée dans l'organe de préhension 10 un plateau 13, contre lequel peut venir en appui l'extrémité supérieure 14 du col 12 au terme du vissage de l'organe de préhension 10, afin d'obtenir une fermeture étanche du récipient 2.

L'extrémité supérieure 14 peut être pourvue, comme illustré, d'une lèvre effilée afin de faciliter l'obtention d'une étanchéité.

Dans une variante non illustrée, la tige 5 est agencée pour s'appliquer sur la surface radialement intérieure du col 12, afin de fermer de façon étanche le récipient 2. Elle peut comporter à cet effet une portion tronconique ou une lèvre d'étanchéité.

La tige 5 peut être fixée de diverses manières dans l'organe de préhension 10, par exemple par encliquetage, friction, collage ou soudage.

La tige représentée à la figure 1 comporte, au-dessus du plateau 13, une jupe tubulaire 16 servant à la fixation dans l'organe de préhension 10.

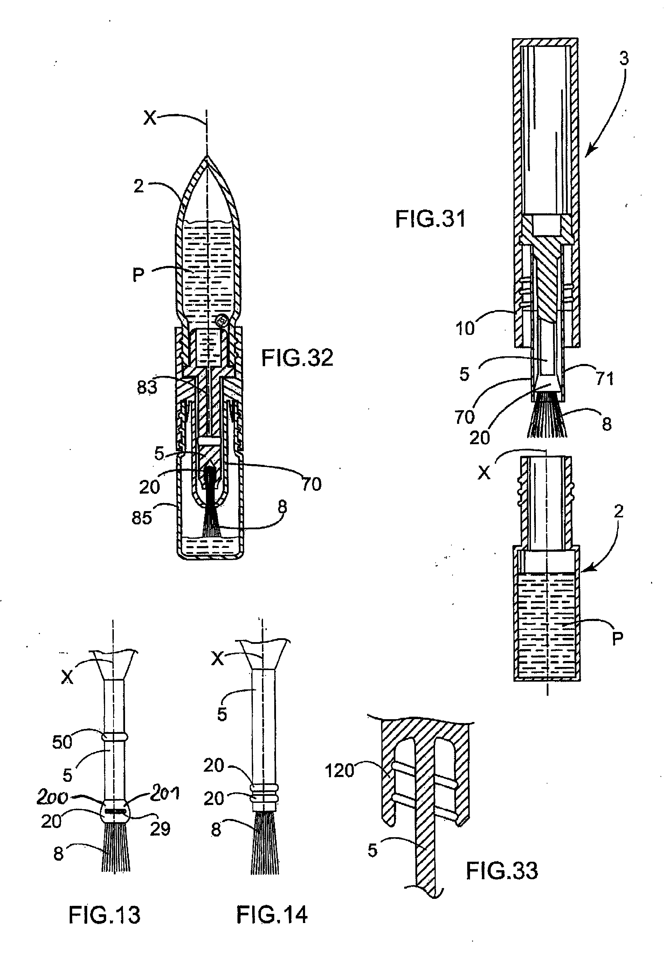

Dans la variante illustrée à la figure 33, la tige 5 est réalisée d'une seule pièce par moulage de matière plastique avec une jupe filetée 120 servant à la fixation sur le col du récipient 2. Cette jupe 120 peut servir d'organe de préhension 10 et peut, le cas échéant, être recouverte par une pièce d'habillage.

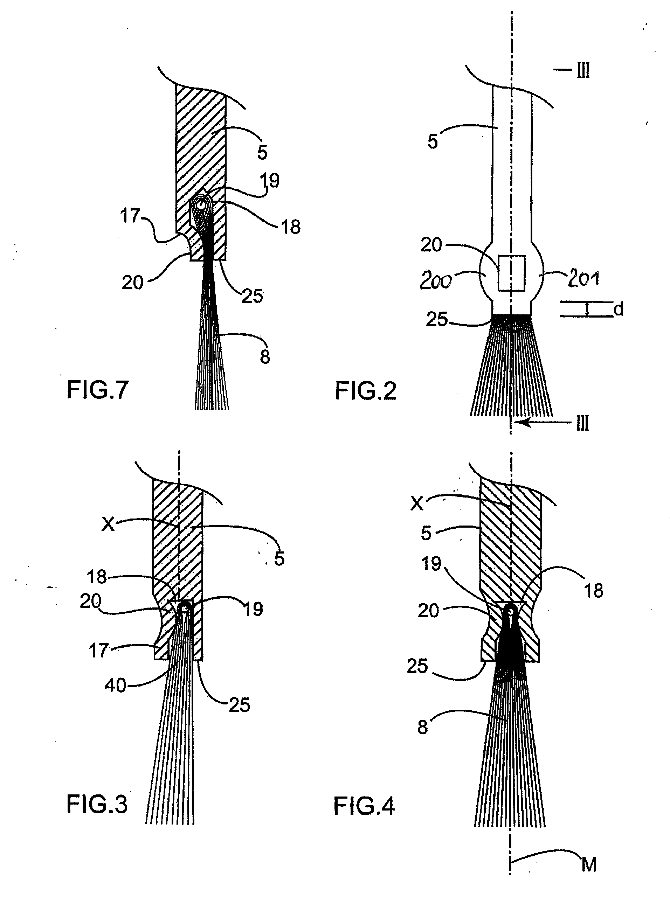

En se reportant à la figure 3, on peut voir que la tige 5 comporte, à son extrémité inférieure, une paroi tubulaire 17 qui définit un logement 18 dans lequel est reçue la touffe de poils 8.

La tige 15 peut être de section transversale pleine au-dessus du logement 18, sur au moins une portion de sa longueur, par exemple sur plus de la moitié de sa longueur, voire sur toute sa longueur.

Dans l'exemple considéré, la touffe de poils 8 est repliée en deux dans le logement 18 et maintenue dans celui-ci au moyen d'une agrafe 19 insérée dans la matière de la tige 5 au-dessus du logement 18.

La paroi tubulaire 17 comporte au moins une portion matricée 20, qui s'étend par exemple d'un côté de la tige dans l'exemple de la figure 3 et sur deux côtés opposés de la tige dans la variante de la figure 4.

La portion matricée 20 s'étend par exemple à distance d non nulle de l'extrémité inférieure 25 de la tige.

Un tel matriçage peut être utile notamment pour améliorer le maintien de la touffe de poils 8 dans la tige 5, sans nécessairement modifier la forme de l'ouverture 40 du logement 18.

La tige 5 est matricée après la fixation de la touffe de poils 8 dans le logement 18, en étant introduite dans une machine adaptée, ayant au moins une matrice dont la forme correspond au matriçage à réaliser.

Cette machine peut comporter une base ayant une forme adaptée à recevoir la tige, dans une position prédéfinie relativement à la matrice. La base peut permettre de positionner la tige dans une position angulaire prédéfinie par rapport à la matrice, afin que le matriçage s'effectue de manière repérée relativement à la touffe et/ou à l'agrafe 19.

Des matrices ayant différentes formes peuvent être utilisées, selon le résultat recherché.

Le matriçage peut s'effectuer à froid ou à chaud, selon par exemple la forme que l'on souhaite donner à la ou aux portions matricées, ainsi que selon la nature de la tige et/ou celle des poils, éventuellement.

On a illustré aux figures 5 et 6 une variante de réalisation dans laquelle le matriçage 20 exerce une influence sur la configuration des poils hors de la tige.

La portion matricée 20 s'étend vers le haut à partir de l'extrémité inférieure 25 de la tige sur une distance qui est par exemple inférieure à la profondeur du logement 18.

La présence de la portion matricée 20, dans l'exemple des figures 5 et 6, entraîne un rétrécissement de la section intérieure du logement 18 en direction de l'ouverture de celui-ci, ce qui peut permettre de réaliser par exemple un faisceau de poils moins épais et/ou plus homogène hors de la tige. La tige 5 peut comprendre deux renflements externes 200, 201, de préférence latéralement opposés, au niveau de la portion matricée 20. De tels renflements se projètent vers l'extérieur relativement à la paroi tubulaire 17 de la tige 5. Un tel applicateur peut s'avérer relativement précis.

La présence d'une ou plusieurs portions matricées 20 peut également permettre d'élargir le faisceau de poils, par exemple selon un plan médian M sensiblement perpendiculaire au plan de coupe de la figure 6.

Cela peut permettre par exemple de raccourcir la durée du maquillage, en traitant à chaque passage de l'applicateur une surface plus grande.

L'homme du métier comprendra que, selon la forme donnée à la ou aux portions matricées 20, on peut aisément modifier la forme du faisceau de poils sans avoir à réaliser un nouveau moule pour la tige.

En outre, la déformation du logement 18 sous l'effet du matriçage de la tige 5 peut améliorer la tenue de la touffe de poils sur la tige, ce qui offre de nouvelles possibilités concernant la touffe de poils, par exemple quant au choix des poils et/ou quant à leur nombre, sans craindre une tenue insuffisante de la touffe sur la tige.

La touffe de poils peut comporter par exemple moins de 110 brins, par exemple 100 brins environ ou moins, avant pliage et agrafage dans le logement 18.

Le cas échéant, la tige peut être rabotée afin de présenter une surface extérieure plus lisse.

On a illustré à la figure 7 la possibilité de ne matricer la tige 5 que d'un côté seulement.

On peut donner au logement 18 différentes formes sans que l'on sorte du cadre de la présente invention.

On a illustré sur les figures 3 et 4 la possibilité de réaliser le logement 18 avec un fond sensiblement plat et perpendiculaire à l'axe longitudinal X de la tige, mais le logement 18 peut présenter d'autres formes encore.

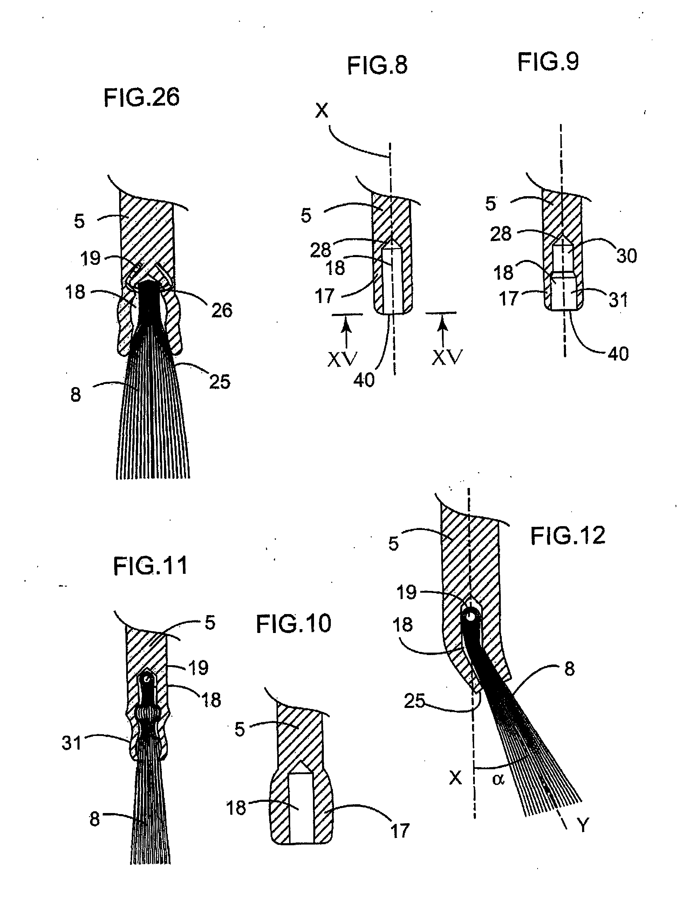

On a représenté isolément à la figure 8 l'extrémité inférieure de la tige de l'applicateur de la figure 7, avant la mise en place du faisceau de poils et matriçage.

Le logement 18 peut par exemple présenter une forme cylindrique de section constante, avec un fond 28 par exemple sensiblement tronconique.

On peut également donner au logement 18 une forme étagée, comme illustré à la figure 9, avec une portion proximale 30, adjacente au fond 28 du logement, et une portion distale 31, élargie par rapport à la portion proximale 30.

La tige 5 peut être réalisée avec une épaisseur de matière accrue autour du logement 18, comme illustré à la figure 10.

Sur cette dernière, la tige 5 présente une portion distale élargie, ce qui permet d'obtenir une paroi tubulaire 17 plus épaisse. Une épaisseur plus grande peut conférer à la tige une meilleure résistance à l'opération de matriçage.

La ou les portions matricées 20 peuvent s'étendre par exemple seulement le long de la portion distale 31 du logement, comme illustré sur la figure 11.

En variante, la ou les portions matricées 20 peuvent s'étendre par exemple seulement le long de la portion proximale 30 du logement 18, voire à la fois le long des portions proximale 30 et distale 31.

La tige 5 peut être matricée de manière à modifier l'orientation du faisceau de poils 8 qui quitte la tige, et l'on peut par exemple matricer celle-ci pour orienter le faisceau de poils quittant la tige selon une direction Y faisant un angle α non nul avec l'axe longitudinal X de la tige 5, comme illustré à la figure 12. L'angle α est par exemple compris entre 1 et 10°.

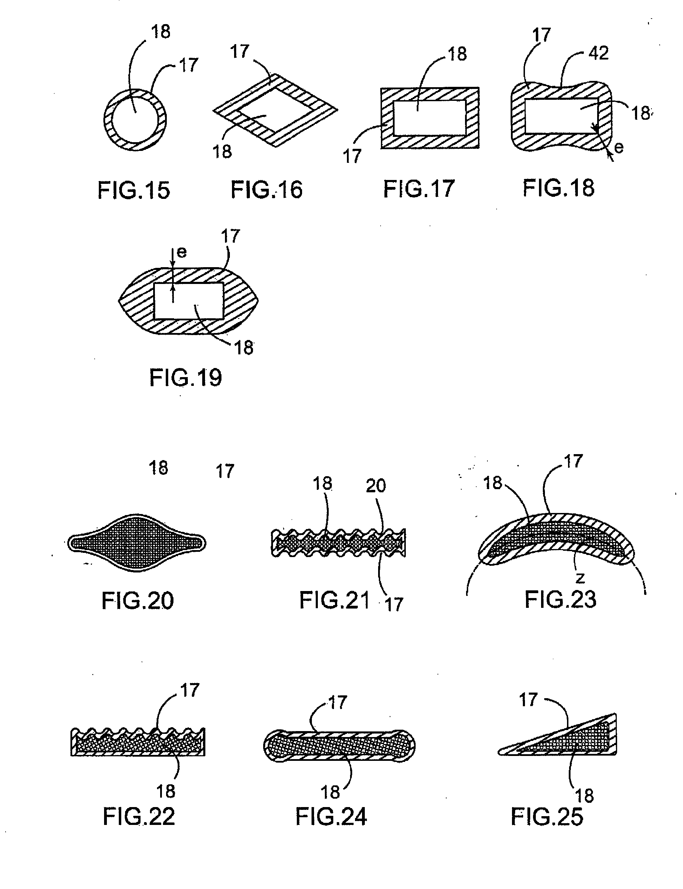

Le matriçage de la tige 5 peut s'effectuer d'une manière telle qu'il en résulte un enlèvement de matière, comme illustré à la figure 13. Sur cette figure, la portion matricée comporte une ouverture latérale 29 qui accroît la flexibilité de l'applicateur.

On voit sur la figure 13 que la tige 5 peut également être matricée au-dessus du logement recevant la touffe de poils 8, de façon à créer une charnière 50.

La tige 5 représentée à la figure 14 comporte plusieurs portions matricées 20 qui permettent d'accroître la tenue de l'agrafe et de modifier la configuration des poils 8. Ces portions matricées 20 sont par exemple réalisées simultanément ou successivement.

La présence des portions matricées peut également conférer plus de souplesse à la tige 5.

L'ouverture 40 du logement 18 peut présenter, avant matriçage, une forme circulaire par exemple, comme illustré à la figure 15, mais l'invention n'est pas limitée à une telle forme.

On a représenté aux figures 16 à 19 d'autres exemples de sections possibles, parmi d'autres.

La tige 5 peut notamment présenter une ouverture de forme polygonale, par exemple en forme de losange ou de rectangle comme illustré sur les figures 16 et 17 respectivement.

On voit sur les figures 18 et 19 que l'épaisseur *e* de la paroi tubulaire 17 qui s'étend autour du logement 18 peut être non constante. En variante, cette épaisseur peut être constante.

La tige 5 peut comporter au moins une gorge longitudinale 42, par exemple de la manière décrite dans la demande de brevet US 2004/0096261.

Une tige de section transversale non circulaire, par exemple aplatie, peut faciliter l'implantation de la touffe de poils avec une orientation prédéfinie par rapport à la tige et peut permettre également de matricer la tige de manière repérée par rapport à la touffe de poils. En variante, la tige 5 peut comporter un détrompeur à cet effet.

Dans un exemple de mise en oeuvre de l'invention, la tige 5 présente une section transversale aplatie, par exemple sensiblement rectangulaire avec des coins arrondis et deux gorges longitudinales sur des faces principales. De telles gorges peuvent canaliser la composition qui s'écoule sur la tige vers une région médiane du faisceau de poils 8.

Le matriçage peut permettre de donner à la tige des formes diverses, par exemple une forme sensiblement aplatie comme illustré à la figure 6, voire une forme généralement lenticulaire ou renflée au centre et à côtés aplatis, comme illustré à la figure 20.

Le matriçage peut également permettre de donner à la tige une section ondulée, par exemple ondulée sur deux côtés opposés comme illustré à la figure 21, ou d'un seul côté comme illustré à la figure 22.

On peut matricer la tige de manière à conférer à l'ouverture 40 du logement une forme ayant un axe longitudinal Z généralement incurvé, comme illustré à la figure 23, l'extrémité de la tige ayant par exemple une forme générale de tuile. Cela peut permettre de créer un faisceau de poils incurvé, pouvant épouser la courbure de l'ongle.

On peut encore donner à l'ouverture du logement 18 une forme plus étroite dans une région centrale qu'aux extrémités, comme illustré à la figure 24.

On peut déformer la tige de façon à ce que l'ouverture du logement présente une forme non symétrique relativement à l'axe longitudinal de la tige, comme illustré à la figure 25. Sur cette figure, la largeur de l'ouverture 40 du logement 18 augmente lorsque l'on se déplace latéralement, le logement 18 présentant par exemple une section transversale sensiblement triangulaire.

Indépendamment de la manière dont elle est matricée, la tige 5 peut être réalisée de diverses façons, étant par exemple pleine sur une partie de sa longueur.

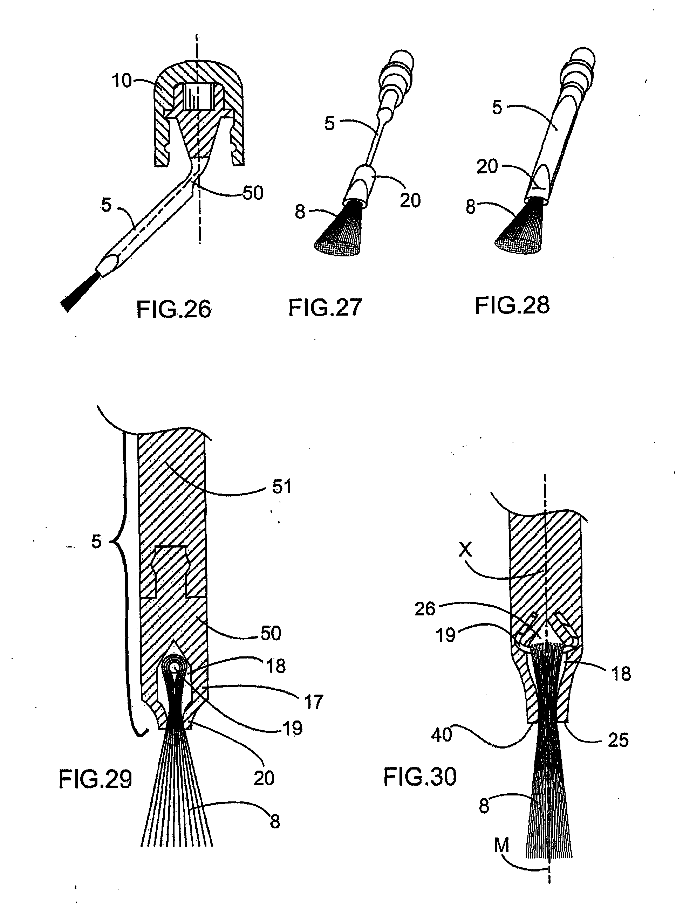

La tige 5 peut par exemple comporter au moins une zone d'articulation 50, comme illustré à la figure 26. Cette dernière peut être réalisée par exemple par matriçage, comme dans l'exemple de la figure 13, ou par moulage.

Des tiges comportant au moins une région articulée sont décrites notamment dans la demande de brevet US 2005-0031401.

La tige peut présenter une portion plus fine, comme illustré à la figure 27. Des exemples de tiges comportant une telle portion plus fine sont divulgués dans le brevet US 6 033 143.

La tige peut également présenter une portion aplatie, comme illustré à la figure 28. Un exemple de tige présentant une telle portion aplatie est donné dans le brevet US précité. Le matriçage de la tige peut avoir pour effet d'aplatir le logement recevant les poils généralement selon un plan parallèle au plat de la tige.

Le logement 18 peut être réalisé dans une portion distale 60 qui est rapportée sur une portion proximale 61 de la tige 5, comme illustré à la figure 29.

La portion distale 60 est par exemple fixée par encliquetage sur la portion proximale 61. En variante, la fixation de la portion distale 60 pourrait s'effectuer différemment, par exemple par collage, soudage, vissage ou sertissage.

L'invention n'est pas limitée aux exemples illustrés.

L'agrafe 19 peut être orientée sensiblement parallèlement au plan médian M comme illustré aux figures 6 et 26, mais en variante l'agrafe 19 peut être orientée différemment, par exemple avec une portion centrale 26 sensiblement perpendiculaire au plan médian M et au grand axe de l'ouverture 40 du logement 18, comme illustré à la figure 30.

La tige 5 de l'applicateur 3 représentée à la figure 31 est entourée par une gaine 70 qui forme avec la tige 5 un espace 71 dans lequel la composition P peut s'accumuler. Cela peut permettre d'accroître l'autonomie de l'applicateur. Des exemples d'applicateurs comportant une gaine entourant la tige sont divulgués dans EP 1 563 759 A1.

Le récipient contenant la composition à appliquer peut être solidaire de l'applicateur lors de l'utilisation de ce dernier.

La tige 5 est par exemple fixée au récipient 2, comme illustré à la figure 32.

La tige 5 peut être parcourue par au moins un canal 83 d'amenée de la composition P.

Une gaine 70 peut entourer la tige 5, le cas échéant, comme illustré.

En l'absence d'utilisation, l'applicateur peut se fixer sur un autre récipient 85.

Le matriçage peut permettre, le cas échéant, de séparer le faisceau de poils quittant la tige en deux sous-faisceaux distincts, comme illustré à la figure 34.

Les poils utilisés peuvent être variés.

On peut par exemple utiliser un mélange de poils, des poils ondulés, éventuellement avec des fréquences d'ondulation différentes.

La touffe de poils peut comporter des poils de diamètres divers, par exemple des poils ayant une plus grande section transversale inférieure ou égale à 6,5/100 mm, par exemple en nombre supérieur à 250 avant pliage et implantation dans la tige.

Les caractéristiques des différents exemples de réalisation peuvent se combiner au sein de variantes non illustrées.

L'expression « comportant un » doit être comprise comme étant synonyme de « comportant au moins un », sauf si le contraire est spécifié.

## Revendications

1. Applicateur pinceau comportant :
- au moins une touffe de poils (8),
- une tige (5) comportant un logement (18) débouchant à une extrémité de la tige, dans lequel est fixée la touffe de poils au moyen d'une agrafe au moins, ce logement étant défini par une paroi tubulaire (17) présentant au moins une portion matricée (20) de façon à accroître la tenue de l'agrafe et/ou modifier la configuration des poils.

2. Applicateur selon la revendication 1, la portion matricée (20) définissant un rétreint dans le logement (18).

3. Applicateur selon l'une des revendications 1 et 2, la portion matricée (20) s'étendant d'un côté seulement du logement (18).

4. Applicateur selon l'une des revendications 1 et 2, la portion matricée (20) s'étendant sur deux côtés opposés au moins de la tige.

5. Applicateur selon l'une quelconque des revendications précédentes, le logement (18) débouchant par une ouverture (40) de section transversale non circulaire après matriçage.

6. Applicateur selon l'une quelconque des revendications précédentes, la portion matricée (20) s'étendant jusqu'à l'extrémité inférieure (25) de la tige (5).

7. Applicateur selon l'une quelconque des revendications 1 à 5, la portion matricée (20) s'étendant en retrait de l'extrémité inférieure (25) de la tige (5).

8. Applicateur selon l'une quelconque des revendications précédentes, la tige (5) présentant sur au moins une portion de sa longueur une section transversale non circulaire.

9. Applicateur selon la revendication 8, la tige présentant sur au moins une portion de sa longueur, au-dessus du logement (18), une section transversale de forme générale aplatie.

10. Applicateur selon la revendication 8, dans lequel la tige (5) comprend deux renflements externes (200, 201), de préférence latéralement opposés, au niveau de la portion matricée (20).

11. Applicateur selon la revendication précédente, l'agrafe (19) étant orientée sensiblement parallèlement à un grand axe de la section transversale.

12. Applicateur selon la revendication 10, l'agrafe (19) étant orientée sensiblement perpendiculairement à un grand axe de la section transversale.

13. Applicateur selon l'une quelconque des revendications 1 à 12, la touffe de poils (8) quittant la tige (5) en formant un faisceau de poils ayant un axe longitudinal sensiblement parallèle à un axe longitudinal d'une portion distale de la tige.

14. Applicateur selon l'une quelconque des revendications 1 à 12, la touffe de poils quittant la tige en formant un faisceau de poils ayant un axe longitudinal (Y) faisant un angle non nul (α) avec un axe longitudinal (X) d'une portion distale de la tige.

15. Applicateur selon l'une quelconque des revendications 1 à 14, la tige comportant une portion distale (60) rapportée sur une portion proximale (61) et le logement (18) étant défini par la portion distale (60).

16. Applicateur selon la revendication précédente, dans lequel la portion distale (60) est fixée par encliquetage, soudure ou matriçage sur la portion proximale (61).

17. Applicateur selon l'une quelconque des revendications précédentes, dans lequel la tige (5) se raccorde à un organe de préhension (10).

18. Applicateur selon la revendication précédente, l'organe de préhension étant configuré pour fermer un récipient (2).

19. Applicateur selon l'une quelconque des revendications 1 à 16, la tige (5) se raccordant à un récipient.

20. Applicateur selon l'une quelconque des revendications précédentes, le logement (18) présentant avant matriçage une forme étagée, avec une portion distale (31) élargie par rapport à une portion proximale (30).

21. Applicateur selon l'une quelconque des revendications précédentes, l'ouverture (40) du logement présentant une forme renflée au centre avec des côtés aplatis.

22. Applicateur selon l'une quelconque des revendications 1 à 20, l'ouverture du logement présentant une forme ondulée.

23. Applicateur selon l'une quelconque des revendications 1 à 20, l'ouverture du logement présentant une section allongée selon un axe longitudinal curviligne (Z).

24. Applicateur selon l'une quelconque des revendications 1 à 20, l'ouverture du logement étant élargie à ses extrémités.

25. Applicateur selon l'une quelconque de revendications 1 à 20, l'ouverture du logement présentant une largeur qui croît latéralement.

26. Applicateur selon l'une quelconque des revendications 1 à 25, la touffe de poils comportant moins de 110 brins avant pliage et introduction dans le logement, notamment moins de 100 brins.

27. Applicateur selon l'une quelconque des revendications 1 à 26, comportant une gaine (70) entourant la tige (5).

28. Applicateur selon l'une quelconque des revendications 1 à 27, la tige comportant une ouverture latérale (29) débouchant dans le logement (18).

29. Applicateur selon l'une quelconque des revendications 1 à 28, comportant deux portions matricées (20) s'étendant à distance l'une de l'autre le long du logement (18).

30. Applicateur selon l'une quelconque des revendications précédentes, dans lequel la tige présente, avant matriçage, une portion distale élargie.

31. Dispositif (1) de conditionnement et d'application comportant :
- un récipient (2) contenant une composition (P) à appliquer,
- un applicateur (3) tel que défini dans l'une quelconque des revendications précédentes.

32. Dispositif selon la revendication 31, dans lequel la composition (P) contenue dans le récipient est à appliquer sur le corps humain.

33. Dispositif selon la revendication 32, dans lequel la composition est un vernis à ongles, ou une composition à appliquer sur les lèvres.

34. Dispositif selon l'une quelconque des revendications 31 à 33, dans lequel l'applicateur est agencé pour se fixer sur le récipient.

35. Dispositif selon l'une quelconque des revendications 31 à 33, l'applicateur étant solidaire du récipient lors de l'application.

36. Procédé de fabrication d'un applicateur pinceau, dans lequel :
- on matrice une tige (5) comportant à une extrémité un logement dans lequel est agrafée une touffe de poils, de façon à modifier la forme du logement.

37. Procédé selon la revendication précédente, dans lequel le matriçage s'effectue à froid.

38. Procédé selon la revendication précédente, dans lequel le matriçage s'effectue à chaud.

39. Procédé selon l'une quelconque des revendications 36 à 38, dans lequel le matriçage s'effectue de façon repérée par rapport à la tige.
